# EUROPEAN PATENT APPLICATION

(11) **EP 4 187 121 A1**
(43) Date of publication of application: **31.05.2023**
(21) Application number: 21211258.5
(22) Date of filing: 30.11.2021
(51) Int. Cl.: F16F 7/00, B60R 19/34

(54) **DEFORMATION ELEMENT IN AN IMPACT ABSORBING STRUCTURE**

(71) Applicant: Constellium Singen GmbH, 78224 Singen (DE)
(72) Inventor: SCHMID, Thomas, 78315 RADOLFZELL (DE); RIETSCHLE, Dirk, 78247 HILZINGEN (DE); KLEINDICK, Tim, 78224 SINGEN (DE); GREILICH, Alexander, 78224 SINGEN (DE)
(74) Representative: Constellium - Propriété Industrielle

(57) **Abstract**

Deformation element (3) for a motor vehicle made from an extruded hollow profile having at least one internal web (35), said deformation element (3) having a crash length (L), an outer section (31), an inner section (32), a superior lateral wall (331), an inferior lateral wall (332), side lateral walls (333) and at least one lateral section (34, 34a, 34b), said deformation element (3) being intended to connect a bumper beam (2) to a side rail (4), the outer section (31) intended to be in relation to a bumper beam connecting wall (22, 23) having an outer surface area (A1) and the inner section (32) intended to be in relation to the side rail (6) having an inner surface area (A2), wherein said outer surface area (A1) is larger than said inner surface area (A2).

## Description

### FIELD OF THE INVENTION

The present invention relates to a deformation element for a motor vehicle made from an extruded hollow profile and a method to produce such deformation element. The present invention relates further to an impact absorbing structure comprising at least one deformation element. The deformation element of this invention comprises an outer section intended to be in relation to the cross beam and an inner section intended to be in relation to the side rail. The deformation element is designed to have an outer surface area of its outer section larger than its inner surface area of its inner section

### BACKGROUND

The terms crash management system or impact absorbing structure are generally used to describe the structural module consisting of the bumper beam and the related attachments which connect the bumper beam to the longitudinal side members of the vehicle. The main goal of an impact absorbing structure is to prevent damages following an impact between a vehicle and an obstacle. An impact absorbing structure combines two of the elements constituting the automotive structural design. An impact absorbing structure includes a bumper beam, also called cross member or cross beam, typically extending laterally across the front or rear end of a vehicle, which is a structural element, and absorbers also called shock absorbers or deformation elements or crash boxes, which are energy absorbing elements. An impact absorbing structure has the ability to absorb sufficient crash energy, particularly at the beginning of a crash, to meet the OEM's requirements and to guide the remaining crash forces into the rest of the body structure. The impact absorbing structure is positioned on the front or rear structure of the vehicle such that each absorber is interposed between a side rail and bumper beam.

The deformation element of an automobile is designed to improve damageability and repair-ability of the car body, which allows the absorption of impact forces through bending deformation. Deformation element has function to absorb energy resulted of the crash during a collision. The impact energy absorbed will cause deformation of the deformation element itself, thereby reducing the impact to the passenger. These structures play important role to absorb the impact energy of the frontal crash by plastic deformation to protect the occupants. During crushing, these structures will exhibit plastic deformation by collapse and sequential folding process. Therefore, the plastic deformation process must be controlled to absorb as much energy as possible thus the severity of injury could be minimized.

Deformation elements are in relation to bumper beam on one side and to the vehicle structure via side rails on the other side. The areas where the deformation element is in relation with both elements play an important role in the impact energy absorption process.

In order to insure the safety of passengers but also to limit the damage caused to the vehicle, vehicles are subject to a wide variety of tests and evaluations. Such tests are usually mandated by government regulations and insurance certifications.

Therefore, the crash management systems are continuously optimized by the vehicle manufacturers who should often completely modify the system, to propose a better protection or also to comply to the new requirements. The improvement proposed should not imply a too much increase of weight of the vehicle in order to have less impact as possible on the environmental aspect.

FR 3 058 693 relates to a reinforcement for deformation element disposed between a longitudinal structural profile and a bumper beam. The reinforcement comprises two arms designed to extend longitudinally on sides of the deformation element, between the rail and the bumper beam, according to a tapered profile. The reinforcement comprises, in addition, a fixing plate supporting the arms and configured to be secured between the plates for fastening the deformation element and the longitudinal structural profile. An additional part is needed to reinforce the crash management system which is disadvantageous in term of weight and number of elements to be implemented.

DE 10 2009 050 772 relates to a deformation element for carrier assembly of motor vehicle, having support struts holding respective bearing elements at distance to each other, where one of struts exhibits large deformability than another strut. This system is disadvantageous in term of number of elements to be implemented.

KR20160050145 relates to a crash box assembly satisfying impact performance. The crash box assembly satisfying impact performance comprises a deformation element, a pair of nuts, bent pieces and a fixed bracket. The deformation element has the shape of a rectangular container and is included between a bumper beam and chassis to absorb collision energy caused when the vehicle is involved in a collision. This system comprises several pieces to be implemented.

### SUMMARY OF THE INVENTION

An object of the invention is a deformation element for a motor vehicle made from an extruded hollow profile having at least one internal web, said deformation element having a crash length L, an outer section, an inner section, a superior wall, an inferior wall, lateral walls and at least one lateral section, said deformation element being intended to connect a bumper beam having an upper wall, a lower wall, and at least one connecting wall linking the upper wall and the lower wall,, to a side rail, the outer section intended to be in relation to a bumper beam connecting wall linking the upper wall and the lower wall having an outer surface area (A1) and the inner section intended to be in relation to the side rail having an inner surface area (A2), wherein said outer surface area (A1) is larger than said inner surface area (A2).

Another object of the invention is an impact-absorbing structure for a motor vehicle comprising at least one side rail, a bumper beam having an upper wall, a lower wall, and at least one connecting wall linking the upper wall and the lower wall, and at least one deformation element according to the invention connecting the side rail to the bumper beam.

Yet another object of the invention is a method to manufacture a deformation element comprising the following steps:
- Supply an extruded profile,
- Cut the extruded profile to obtain an outer section intended to be in relation to the bumper beam inner side so that the outer section has an outer surface area (A1)
- Cut the extruded profile to obtain an inner section intended to be in relation to side rail so that the inner section has an inner surface area (A2)
- Cut at least the superior wall, the inferior wall and one lateral wall of said deformation element
- Optionally cut a second time the superior wall, the inferior wall and one lateral wall of said deformation element
wherein said steps are designed so that said deformation element outer surface area (A1) is higher than said inner surface area (A2).

### DESCRIPTION OF THE INVENTION

A vehicle structure is made of several parts (like for example crash management systems or side rails) that are continuously optimized to answer to the requirement imposed by the legislation. Structural beams are used in these parts of the vehicle structure. The structural beam is to be configured as bending-stiff as possible so that the different impact scenarios, for example collision with a pole, a bumper-to-bumper crash, collision with an obstacle or also side collision, are accounted for and an uncontrolled crash is prevented. A deformation element is part of an impact absorbing structure and is positioned between the bumper beam and the side rails. It is desirable that a deformation element be deformed by absorb impact energy before striking another vehicle part such as frames to ensure the overall integrity of chassis, hence passenger safety.

In order to transmit the residual impact energy efficiently once the deformation element is deformed, it is necessary that the deformation element be aligned with the side rail, which has an impact on its width. On the side that is in contact with the bumper beam, the deformation element has a function of supporting the bumper beam, in the contact surface between these two elements. It is possible to improve this support function by integrating additional elements into the system, but these require complex joining steps.

The problem to be solved by the invention is to improve the support of the bumper beam provided by the deformation element without impacting the side in relation to the side rails. Improving or increase the support of the bumper beam by the deformation element permit to stiffen the bumper beam and therefore increase the energy absorption ability of the bumper beam and lower the intrusion into the vehicle.

The solution proposed by the invention is a deformation element for a motor vehicle made from an extruded hollow profile having at least one internal web, said deformation element having a crash length L, an outer section, an inner section, a superior lateral wall, an inferior lateral wall, lateral walls and at least one lateral section, said deformation element being intended to connect a bumper beam having an upper wall, a lower wall, and at least one connecting wall linking the upper wall and the lower wall, to a side rail, the outer section intended to be in relation to a bumper beam connecting wall linking the upper wall and the lower wall having an outer surface area (A1) and the inner section intended to be in relation to the side rail having an inner surface area (A2), wherein said outer surface area (A1) is larger than said inner surface area (A2). The impact load is consequently spread over a larger area, thus improving the support of the bumper beam by the deformation element and permitting to stiffen the bumper beam.

According to one embodiment of the invention, the bumper beam is an open profile having one connecting wall linking the upper and lower walls. In this embodiment the wall linking the upper and lower wall of the bumper beam is the bumper beam inner side and outer side simultaneously and is facing the outside and the inside of the vehicle.

According to one embodiment of the invention, the bumper beam is a hollow profile having an outer wall, an inner wall an upper wall and a lower wall. The outer wall is facing the outside of the vehicle and the inner wall is facing the inside of the vehicle. An upper wall and a lower wall connect the outer wall and the inner wall. In this embodiment of the invention, the outer section of the deformation element, is intended to be in relation to the bumper beam inner wall with an outer surface area (A1). The bumper beam has at least one chamber, preferably several chambers.

In one embodiment of the invention, the bumper beam is an extruded profile.

According to the invention the deformation element is made from an extruded hollow profile having at least one internal web. The deformation element has a crash length L, an outer section, an inner section, a superior lateral wall, an inferior lateral wall, side lateral walls and at least one lateral section. The side laterals walls are on each side of the deformation element. The deformation element is extruded according to an extrusion direction E. The internal web may be a web partitioning the hollow profile in one or more chambers, and/or a web partitioning only part of one chamber. The crash length L correspond to the part of the deformation element which may be deformed by plastic deformation in case of impact when the deformation element is placed in an impact absorbing structure. The outer section of the deformation element corresponds to the section which is in relation to a bumper beam connecting wall linking the upper and lower wall of the bumper beam. The inner section of the deformation element corresponds to the section is in relation to the side rail. Both sections have surface section areas, A1 and A2 respectively. The deformation element comprises superior wall, inferior wall and side lateral walls, parallel to the extrusion direction E, which together form the outline of the deformation element and delimit the section of the deformation element.

According to one embodiment of the invention, the extruded hollow profile is cut so that the deformation element cross-section varies along at least part the crash length (L) in the extrusion direction of said extruded hollow profile. According to another embodiment, at least the superior lateral wall, the inferior lateral wall and one side lateral wall of the deformation element are cut, so that the deformation element has a variable cross section surface area perpendicularly to the extrusion direction of the extruded hollow profile, along at least part of the length (L). This cut makes it possible to create a lateral section. In yet another embodiment of the invention, the deformation element comprises at least two lateral sections.

Preferably, the cross section decreases starting from the outer section and going to the inner section of the deformation element.

According to the invention, the deformation element is extruded according to an extrusion direction E. Preferably, the deformation element comprises at least 2 chambers. Even more preferably, the deformation element is an aluminium extruded profile.

In one embodiment of the invention, the deformation element comprises at least one flange. In a particular embodiment, the deformation element comprises at least one flange which extends its superior wall and /or its inferior wall.

Advantageously the superior wall and the inferior wall or the two lateral walls of the deformation element are wider on the outer section of the deformation than on its inner section. Consequently, the outer section area A1 is increased compare to the inner surface area A2 and thus, the support of the bumper beam provided by the deformation element is improved to obtain a stiffer bumper beam, able to absorb more energy created in case of impact.

An impact-absorbing structure for a motor vehicle, according to the invention comprises a bumper beam having an upper wall, a lower wall, at least one connecting wall linking the upper wall and the lower wall, and at least one deformation element. Advantageously, the deformation element of the invention permits to improve the performance of the impact absorbing structure. The structure of the motor vehicle comprises at least one side rail intended to support a bumper beam. In the impact absorbing structure, the side laterals walls of the deformation element are positioned one on the inside of the vehicle and one on the outside of the vehicle, creating inside and outside points of contact. In the event of impact, the bumper beam will absorb the energy of impact, but will also start to enter inside the motor vehicle. Consequently, an axis of rotation is created at the points of contact between the deformation element and the bumper beam on the inside of the vehicle along the side lateral wall. Advantageously, in some embodiments of the invention, the inside point of contact is offset towards the inside of the vehicle. The side lateral wall of the deformation element facing the inside of the vehicle, is offset towards the inside of the vehicle on the side of the outer section. In this embodiment the axis of rotation is shift towards the inside of the vehicle along the bumper beam, the impact load on the other side lateral wall of the deformation element is reduced and especially on the welded zones, which are recognised as weak areas.

In yet another embodiment the outside point of contact between the deformation element and the bumper beam on the outside of the vehicle is offset towards the outside of the vehicle.

In a further embodiment of the invention, the points of contact between the deformation element and the bumper beam are offset down compare to points of contact between the deformation element and the side rail along the deformation element.

Preferably the deformation element of the impact absorbing structure of the invention is connected to the side rail and/or to the bumper beam trough an intermediate plate.

In one embodiment, the deformation element of the impact absorbing structure of the invention is connected to the bumper beam trough at least one of its flanges.

In one other embodiment part of the superior wall, inferior wall and lateral walls of the deformation element of the impact absorbing structure of the invention are connected to the side rail. Particularly, part of the deformation element is introduced in the side rail of the structure of the motor vehicle.

Preferably the deformation element of the absorbing is connected to the side rail and/or to the bumper beam by welding, screwing, bonding or riveting.

The deformation element according to the invention is made with a method comprising the following steps:
- Supply an extruded profile,
- Cut the extruded profile to obtain an outer section intended to be in relation to the bumper beam inner side so that the outer section has an outer surface area (A1)
- Cut the extruded profile to obtain an inner section intended to be in relation to side rail so that the inner section has an inner surface area (A2)
- Cut at least the superior wall, the inferior wall and one lateral wall of said deformation element
- Optionally cut a second time the superior wall, the inferior wall and one lateral wall of said deformation element
wherein said steps are designed so that said deformation element outer surface area (A1) is higher than said inner surface area (A2).

### DESCRIPTION OF THE DRAWING:

Figure 1 represents one half of an impact-absorbing structure according to one embodiment of the invention from two different angles 1a and 1b, where the bumper beam is an open profile and where the deformation element has one lateral section facing the inside of the vehicle.
Figure 2 represents one half of an impact-absorbing structure according to one embodiment of the invention from two different angles 2a and 2b, where the deformation element has one lateral section facing the inside of the vehicle.
Figure 3 represents one half of an impact-absorbing structure according to one embodiment of the invention from two different angles 3a and 3b, where the deformation element has two lateral sections on each lateral side.
Figure 4 represents one half of an impact-absorbing structure according to a one embodiment of the invention from three different angles 4a, 4b and 4c, where the deformation element has one lateral section.
Figure 5 represents one half of an impact-absorbing structure according to a one embodiment of the invention from two different angles 5a and 5b, where the deformation element has one lateral section.
Figure 6 represents one half of an impact-absorbing structure according to a one embodiment of the invention from two different angles 6a and 6b, where the deformation element has one lateral section.
Figure 7 represents one half of an impact-absorbing structure according to a one embodiment of the invention from two different angles 7a and 7b, where the deformation element has one lateral section.
Figure 8 represents one half of an impact-absorbing structure according to a one embodiment of the invention from two different angles 7a and 8b, where the deformation element has one lateral section.

List of references:
- 1: impact-absorbing structure
- 2: bumper beam
- 21: upper wall of the bumper beam
- 22: outer connecting wall of the bumper beam
- 23: inner connecting wall of the bumper beam
- 24: lower wall of the bumper beam
- 25: hollow chamber of the bumper beam
- 26, 27: flange on the bumper beam
- 3: deformation element
- 31: outer section of the deformation element
- 32: inner section of the deformation element
- 33: lateral wall of the deformation element
- 331: superior lateral wall of the deformation element
- 332: inferior lateral wall of the deformation element
- 333: side lateral wall of the deformation element
- 34, 34a, 34b: lateral section of the deformation element
- 35: internal web of the deformation element
- 36: hollow chamber of the deformation element
- 37: flange of the deformation element
- 4: Side rail
- 51: welding seam
- 52: Screw
- 6: connecting plate
- A1: outer surface area
- A2: inner surface area,
- E: extrusion direction
- L: crash length
- S: symmetry plane
- C, D, F, G, K, J, O, P: Contact point between deformation element and bumper beam
- H, I, Q, R: Contact point between deformation element and connecting plate
- M, N: Contact point between deformation element and side rail

### DETAILED DESCRIPTION OF THE INVENTION

Throughout all the figures, same or corresponding elements may generally be indicated by same reference numerals. These depicted embodiments are to be understood as illustrative of the invention and not as limiting in any way.

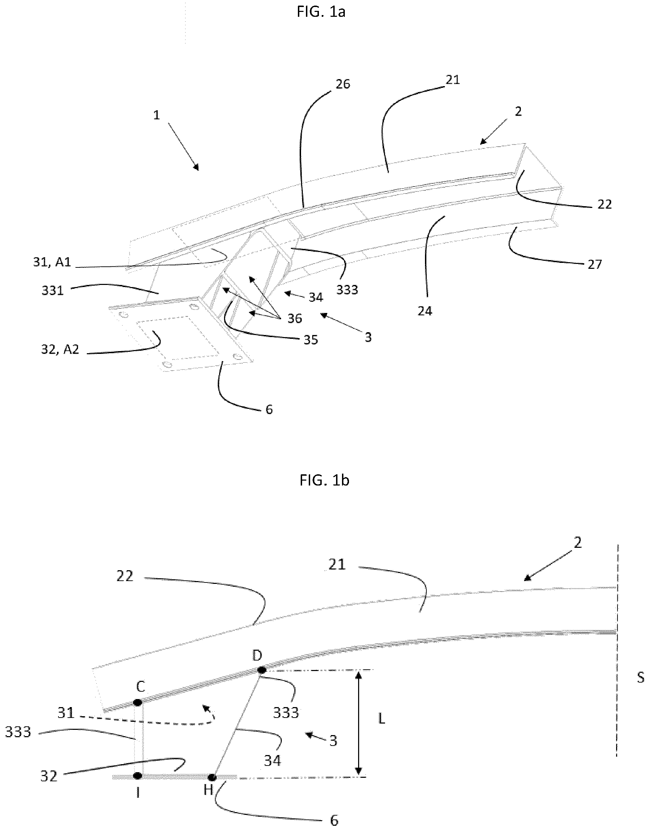

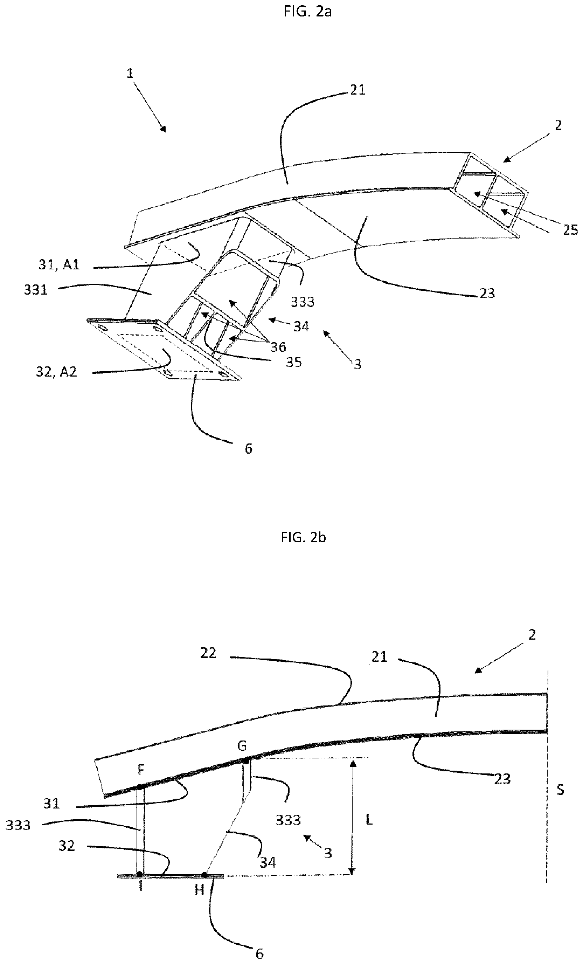

Figures 1a and 1b represent one half of an impact-absorbing structure according to one embodiment of the invention from two different angles. The other half can be obtained symmetrically. Fig 1a shows a perspective view while Fig. 1b shows a view from above. The symmetry plane S is shown on Fig. 2b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent open profile. The upper wall 21 has a flange26 and the upper wall 24 has a flange 27. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 and a lower wall 24 The upper wall 21 has a flange26 and the upper wall 24 has a flange 27. The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element has a lateral section 34, which was obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A2 is also the surface area on the connecting plate 6 which connects the deformation element to the structure of the motor vehicle. A1 is larger than A2 because part of the initial extruded profile was cut at the lateral section 34. Figure 1b shown the contact points C, and D between the deformation element 3 and the bumper beam 2 and the contact points H and I between the deformation element 3 and the connecting plate 6. D is offset towards the inside of the vehicle along the bumper beam 2 compare to H.

Figures 2a and 2b represent one half of an impact-absorbing structure according to one embodiment of the invention from two different angles. The other half can be obtained symmetrically. Fig 2a shows a perspective view while Fig. 2b shows a view from above. The symmetry plane S is shown on Fig. 2 b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent hollow profile having two chambers 25. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 an inner connecting wall 23 and a lower wall (not shown). The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element has a lateral section 34, which was obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A2 is also the surface area on the connecting plate 6 which connects the deformation element to the structure of the motor vehicle. A1 is larger than A2 because part of the initial extruded profile was cut at the lateral section 34. Figure 2b shown the contact points F, and G between the deformation element 3 and the bumper beam 2 and the contact points H and I between the deformation element 3 and the connecting plate 6. G is offset towards the inside of the vehicle along the bumper beam 2 compare to H.

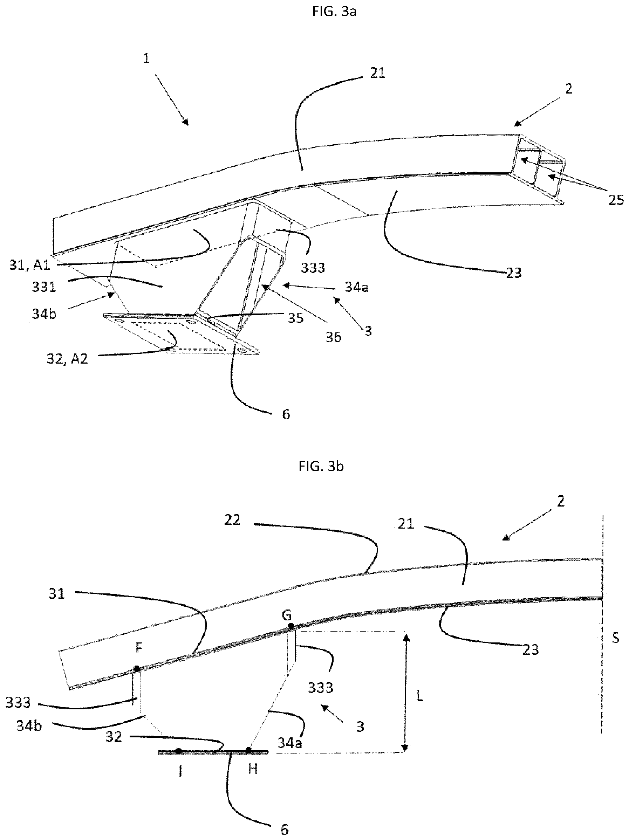

Figures 3a and 3b represent one half of an impact-absorbing structure according to another embodiment of the invention from two different angles. The other half can be obtained symmetrically. Fig 3a shows a perspective view while Fig. 3b shows a view from above. The symmetry plane S is shown on Fig. 3 b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent hollow profile having two chambers 25. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 an inner connecting wall 23 and a lower wall (not shown). The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element has two lateral sections 34a and 34b, which were obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A2 is also the surface area on the connecting plate 6 which connects the deformation element to the structure of the motor vehicle. A1 is larger than A2 because part of the initial extruded profile was cut at the lateral section 34. Figure 3b shows the contact points F, and G between the deformation element 3 and the bumper beam 2 and the contact points H and I between the deformation element 3 and the connecting plate 6. The point G is offset towards the inside of the vehicle along the bumper beam 2 compare to point H and point F is offset towards the outside of the vehicle along the bumper beam 2 compare to point I.

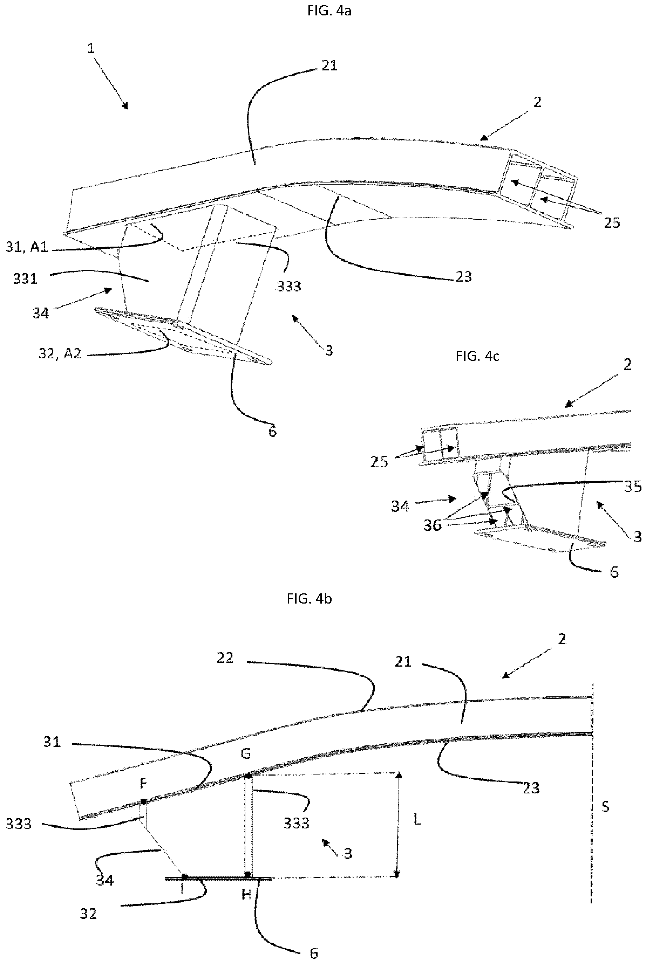

Figures 4a, and 4b represent one half of an impact-absorbing structure according to another embodiment of the invention from two different angles. The other half can be obtained symmetrically. Fig 4a shows a perspective view while Fig. 4b shows a view from above. The symmetry plane S is shown on Fig. 4 b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures. Figure 4c represent a perspective view of one end of the impact absorbing structure.

The bumper beam 2 of the impact-absorbing structure 1 is a bent hollow profile having two chambers 25. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 an inner connecting wall 23 and a lower wall (not shown). The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element has a lateral sections 34, which was obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A2 is also the surface area on the connecting plate 6 which connects the deformation element to the structure of the motor vehicle. A1 is larger than A2 because part of the initial extruded profile was cut at the lateral section 34. Figure 4b shown the contact points F, and G between the deformation element 3 and the bumper beam 2 and the contact points H and I between the deformation element 3 and the connecting plate 6. The point F is offset towards the outside of the vehicle along the bumper beam 2 compare to point I.

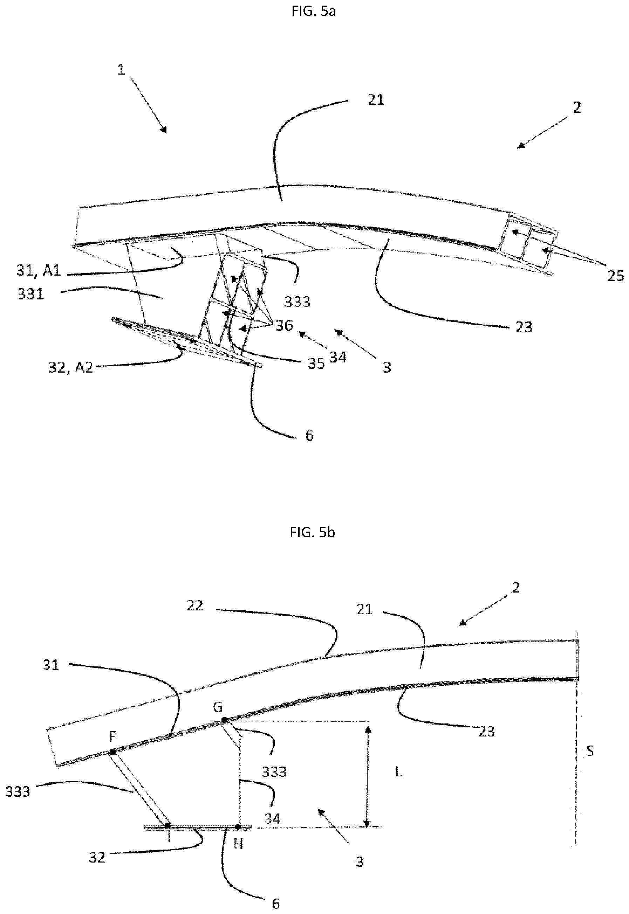

Figures 5a, and 5b represent one half of an impact-absorbing structure according to another embodiment of the invention from two different angles. The other half can be obtained symmetrically. Fig 5a shows a perspective view while Fig. 5b shows a view from above. The symmetry plane S is shown on Fig. 5b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent hollow profile having two chambers 25. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 an inner connecting wall 23 and a lower wall (not shown). The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element has a lateral sections 34, which was obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A2 is also the surface area on the connecting plate 6 which connects the deformation element to the structure of the motor vehicle. A1 is larger than A2 because part of the initial extruded profile was cut at the lateral section 34. Figure 5b shown the contact points F, and G between the deformation element 3 and the bumper beam 2 and the contact points H and I between the deformation element 3 and the connecting plate 6. The points G and F are offset towards the outside of the vehicle along the bumper beam 2 compare to point H and point I respectively.

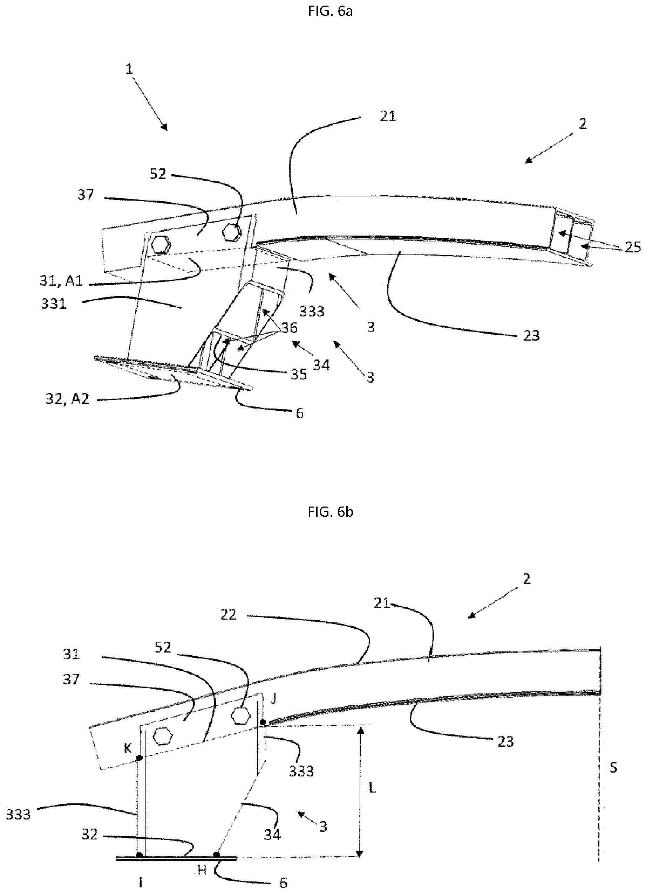

Figures 6a, and 6b represent one half of an impact-absorbing structure according to another embodiment of the invention from two different angles. The other half can be obtained symmetrically. Fig 6a shows a perspective view while Fig. 6b shows a view from above. The symmetry plane S is shown on Fig. 6b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent hollow profile having two chambers 25. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 an inner connecting wall 23 and a lower wall (not shown). The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element 3 has on flange 37 extending from the superior lateral wall 331. The flange 37 is used to connect the deformation element 3 to the upper wall 21 of the bumper beam 2. The flange is connected to the bumper beam 2 using screws 52. The deformation element has a lateral sections 34, which was obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A2 is also the surface area on the connecting plate 6 which connects the deformation element to the structure of the motor vehicle. A1 is larger than A2 because part of the initial extruded profile was cut at the lateral section 34. Figure 6b shown the contact points K, and J between the deformation element 3 and the bumper beam 2 and the contact points H and I between the deformation element 3 and the connecting plate 6. The points J is offset towards the outside of the vehicle along the bumper beam 2 compare to point H.

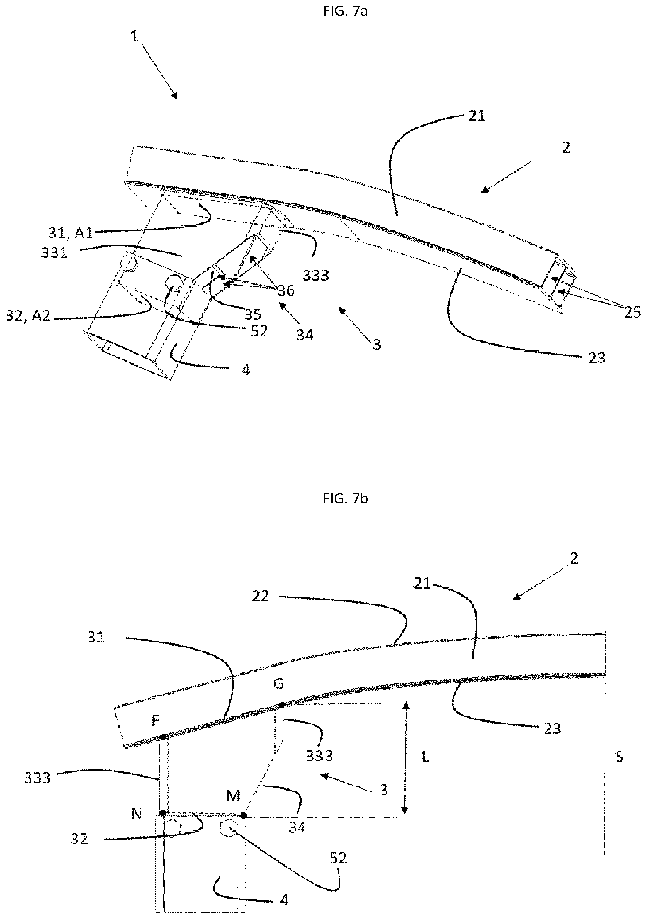

Figures 7a, and 7b represent one half of an impact-absorbing structure according to another embodiment of the invention from two different angles. The other half can be obtained symmetrically. Fig 7a shows a perspective view while Fig. 5b shows a view from above. The symmetry plane S is shown on Fig. 7b. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent hollow profile having two chambers 25. The bumper beam is connected to a deformation element 3 that is itself connected to a side rail 4 of the vehicle using screws 52.

The bumper beam 2 has an outer connecting wall 22, an upper wall 21 an inner connecting wall 23 and a lower wall (not shown). The deformation element 3 is made from an extruded hollow profile having internal webs 35 and several chambers 36. The deformation element has a crash length L. The deformation element has an outer section 31, an inner section 32, a superior lateral wall 331, side lateral walls 333 and an inferior lateral wall (not shown). The deformation element has a lateral sections 34, which was obtained by cutting the superior lateral wall, the inferior lateral wall and a side lateral wall. The surface area of the outer section 31 is A1. A1 is also the surface area of the inner connecting wall 23 where the bumper beam is connected to the deformation element. The surface area of the inner section 32 is A2. A1 is larger than A2 because part of the initial extruded profile was cut at the lateral section 34. Figure 7b shown the contact points F, and G between the deformation element 3 and the bumper beam 2 and the contact points M and N between the deformation element 3 and side rail 4. The points G is offset towards the outside of the vehicle along the bumper beam 2 compare to point M.

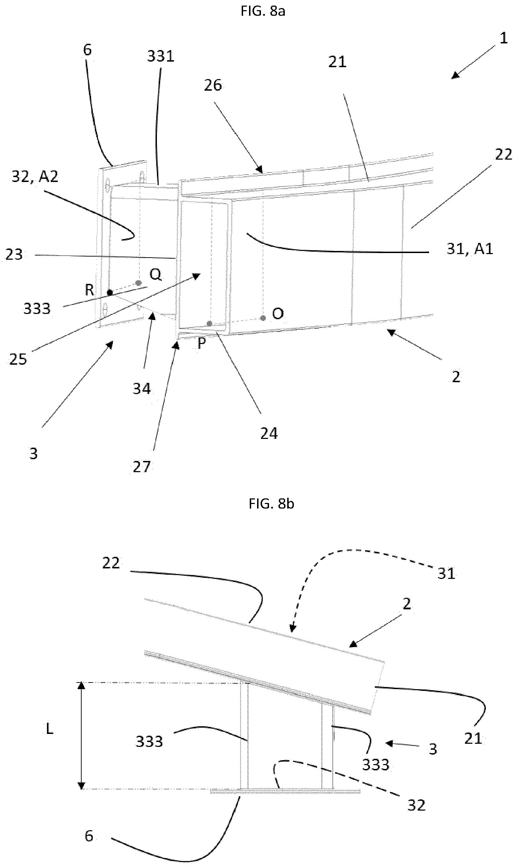

Figures 8a, and 8b represent one half of an impact-absorbing structure according to another embodiment of the invention from two different angles. The other half can be obtained symmetrically. Fig 8a shows a perspective view while Fig. 8b shows a view from above. Minor differences may occur between the two sides such as the presence of a towing eye. The impact-absorbing structure 1 is composed of a bumper beam 2 and two deformation elements 3 positioned at each end side of the bumper beam; one deformation element is not shown on the Figures.

The bumper beam 2 of the impact-absorbing structure 1 is a bent hollow profile having one chambers 25. The bumper beam is connected to a deformation element 3 that is itself connected to a connecting plate 6. The connecting plate 6 can be connected to a side rail of a vehicle (not shown).

The bumper beam 2 has an outer connecting wall 22, an upper wall 21 an inner connecting wall 23 and a lower wall 24. The deformation element 3 is made from an extruded hollow profile having internal webs 35 and several chambers 36, that are not visible on figure 8. The deformation element has a crash length L. The deformation element has an outer section 31, an inner section 32, a superior lateral wall 331, side lateral walls 333 and an inferior lateral wall (not shown). The deformation element has a lateral sections 34, which was obtained by cutting the inferior lateral wall and two side lateral walls. The surface area of the outer section 31 is A1. A1 is also the surface area of the inner connecting wall 23 where the bumper beam is connected to the deformation element. The surface area of the inner section 32 is A2. A1 is larger than A2 because part of the initial extruded profile was cut at the lateral section 34. Figure 8a shows the contact points O and P between the deformation element 3 and the bumper beam 2 and the contact points Q and R between the deformation element 3 and side rail 4. The points O and P are offset down along the crash element 3 compare to points Q and R.

## Claims

1. Deformation element (3) for a motor vehicle made from an extruded hollow profile having at least one internal web (35), said deformation element (3) having a crash length (L), an outer section (31), an inner section (32), a superior lateral wall (331), an inferior lateral wall (332), side lateral walls (333) and at least one lateral section (34, 34a, 34b), said deformation element (3) being intended to connect a bumper beam (2) having an upper wall (21) a lower wall (24) and at least one connecting wall (22, 23) linking the upper wall (21) and the lower wall (24), to a side rail (4), the outer section (31) intended to be in relation to a bumper beam connecting wall (22, 23) having an outer surface area (A1) and the inner section (32) intended to be in relation to the side rail (6) having an inner surface area (A2), wherein said outer surface area (A1) is larger than said inner surface area (A2).

2. Deformation element (3) according to claim 1 wherein said extruded hollow profile is cut so that the cross-section of said deformation element (3) varies along at least part the length (L) in the extrusion direction (E) of said extruded hollow profile.

3. Deformation element (3) according to any one of claims 1 to 2, wherein the deformation element comprises at least two lateral sections.

4. Deformation element according to any one of claims 1 to 3, wherein said extruded hollow profile comprises at least 2 chambers (36).

5. Deformation element (3) according to any one of claims 1 to 4, wherein said extruded hollow profile is an aluminium extruded profile.

6. Deformation element (3) according to any one of claims 1 to 5, wherein the deformation element (3) comprises at least one flange (37).

7. Deformation element (3) according to any one of claim 1 to 6 wherein the superior lateral wall (331) and the inferior lateral wall (332) of the deformation element (3) are wider on the outer section (31) of the deformation than on its inner section (32).

8. Deformation element (3) according to any one of claims 1 to 7 wherein the bumper beam (2) is a hollow profile having an outer connecting wall (22) and an inner connecting wall (23)

9. Deformation element (3) according to any one of claims 1 to 8 wherein the bumper beam (2) is an extruded profile.

10. Impact-absorbing structure (1) for a motor vehicle comprising at least one side rail (4), a bumper beam (2) having an upper wall (21) a lower wall (24) and at least one connecting wall (22, 23) linking the upper wall (21) and the lower wall (24), and at least one deformation element (3) according to any one of claims 1 to 9 connecting the side rail to the bumper beam.

11. Impact absorbing structure (1) according to claim 10 wherein said deformation element (3) is connected to the side rail (4) and/or to the bumper beam (2) through an intermediate plate (6).

12. Impact absorbing structure (1) according to claim 10 or claim 11 wherein said deformation element (3) is connected to the bumper beam (2) through at least one flange (37).

13. Impact absorbing structure (1) according to any one of claims 10 to 12 wherein part of the superior lateral wall (331), inferior lateral wall (332) and side lateral walls 333) of the deformation element (3) are connected to the side rail (4).

14. Impact absorbing structure (1) according to any one of claims 10 to 13 wherein said deformation element (3) is connected to the side rail (4) and/or to the bumper beam (2) by welding, screwing, bonding or riveting.

15. A method to manufacture a deformation element (3) according anyone of claim 1 to 9 comprising the following steps:
- Supply an extruded profile,
- Cut the extruded profile to obtain an outer section (31) intended to be in relation to the bumper beam inner wall (23) so that the outer section (31) has an outer surface area (A1),
- Cut the extruded profile to obtain an inner section (32) intended to be in relation to side rail (4) so that the inner section (32) has an inner surface area (A2),
- Cut at least the superior lateral wall (331), the inferior lateral wall (332) and one side lateral wall (333) of said deformation element (3),
- Optionally cut a second time the superior lateral wall (331), the inferior lateral wall (332) and one side lateral wall (333) of said deformation element (3),
wherein said steps are designed so that said deformation element outer surface area (A1) is higher than said inner surface area (A2).
